Europäisches Patentamt

European Patent Office

Office européen des brevets

(19)

(11) Veröffentlichungsnummer: **0 346 581**
**A2**

(12) **EUROPÄISCHE PATENTANMELDUNG**

(21) Anmeldenummer: **89106442.0**

(22) Anmeldetag: **11.04.89**

(51) Int. Cl.⁴: **A01K 5/02**

(30) Priorität: **15.06.88 DE 8807758 U**

(43) Veröffentlichungstag der Anmeldung:
**20.12.89 Patentblatt 89/51**

(84) Benannte Vertragsstaaten:
**AT BE CH DE ES FR LI**

(71) Anmelder: **SUEVIA HAIGES GMBH & CO.**
**Postfach 1108 Max-Eyth-Strasse**
**D-7125 Kirchheim/Neckar(DE)**

(72) Erfinder: **Haiges, Adolf**
**Hölderlinstrasse 10**
**D-7124 Bönnigheim(DE)**

(74) Vertreter: **Wolff, Michael, Dipl.-Phys.**
**Kirchheimer Strasse 69 Sillenbuch**
**D-7000 Stuttgart 750120(DE)**

(54) · **Tierfütterungseinrichtung.**

(57) **Gegenstand** der Erfindung ist eine Tierfütterungseinrichtung (A01K 5, 39) mit einer Verschlußklappe.

**Stand der Technik** ist ein "Futterautomat" mit einem keilförmigen, oben und unten offenen Futtervorratsbehälter, der sich nach unten verjüngt und vorn einen Steuerschieber führt, der mit der Rückwand eines Futtertroges unter dem Behälter einen verstellbaren Spalt für den Futterübertritt aus dem Behälter in den Trog bildet.

**Nachteil** dieses "Futterautomaten" ist die Möglichkeit der Verstopfung des Spalts durch feucht gewordenes Futter, von dem bei zu großer Spaltbreite verlorengeht, und die Unmöglichkeit der Futteranfeuchtung durch die Bedienungsperson, da die absichtliche Anfeuchtung die Verstopfung fördert.

**Aufgabe** der Erfindung ist daher die stets bedarfsgerechte Futterabgabe und die Möglichkeit einer gezielten Futterbefeuchtung.

**Lösung** dieser Aufgabe ist ein zweiarmiger Hebel (24), dessen einer Arm eine Schließklappe (18) an einer Futterabgabeöffnung (14.3) des Behälters (16) bildet und dessen anderer Arm als Betätigungselement (22) zum Öffnen und Schließen der Öffnung (14.3) vorgesehen ist.

**Vorteil** dieser Lösung ist die völlige Trennung des Futtervorrats im Behälter vom feuchten/nassen Futtertrog bei geschlossener Futterabgabeeinrichtung, so daß der Futtervorrat trocken und damit fließfähig bleibt, während das Futter im Trog angefeuchtet/getränkt werden kann.

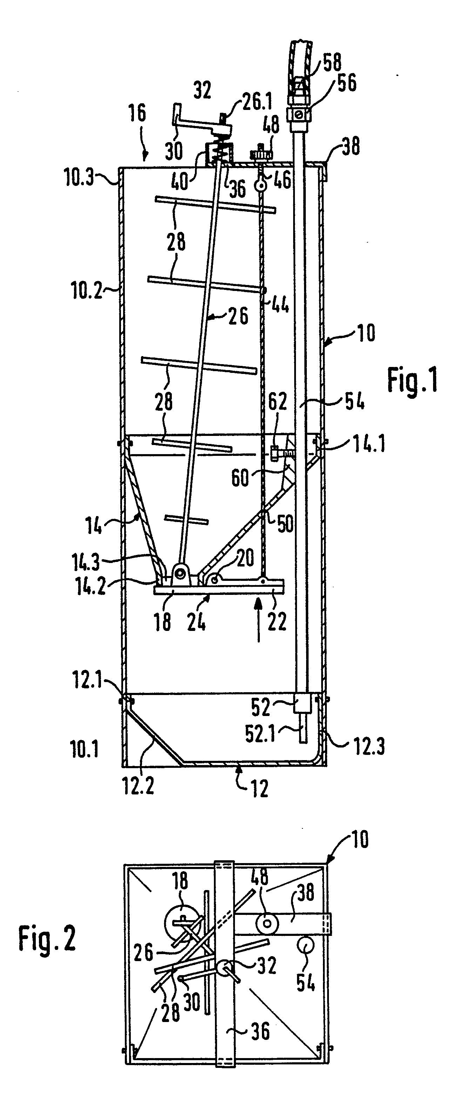

**Hauptabb.** ist Fig. 1.

Fig.1

## Tierfütterungseinrichtung

Die Erfindung betrifft eine Tierfütterungseinrichtung mit einem Futtervorratsbehälter mit einer mehr oder weniger zu öffnenden Futterabgabeöffnung über einem Futtertrog. Solche Einrichtungen dienen der Selbstfütterung der Tiere mit bevorratetem fließfähigem Futter in Form von Mehl oder Pellets, das den Tieren angefeuchtet bekömmlicher wäre, aber trocken gehalten werden muß, damit seine Fließfähigkeit erhalten bleibt.

Bei einer als "Futterautomat" bekannten Einrichtung der im Vorstehenden genannten Art ist der keilförmige, oben und unten offene Futtervorratsbehälter, der sich nach unten verjüngt, mit seinem unteren Ende an der Rückwand des Futtertroges so angeordnet, daß ein auf der Innenseite der Vorderwand des Behälters auf und ab geführter Steuerschieber an seinem unteren Ende mit der gegenüberliegenden Wand des dort zylindrischen Troges einen mehr oder weniger breiten Spalt bildet, durch den Futter aus dem Behälter in den Trog fließen kann, falls das Mengenverhältnis dies zuläßt und falls das am Spalt über diesem stehende Futter nicht zu feucht geworden ist und dadurch seine Fließfähigkeit verloren hat, was häufig vorkommt, weil die Tiere, die sich dort selbst füttern sollen, das am Spalt stehende Futter mit ihrem Speichel und Atem anfeuchten. Eine Vergrößerung der Spaltbreite würde hier zwar Abhilfe schaffen, ließe jedoch zu viel Futter in den Trog gelangen, sodaß dann mit Futterverlusten zu rechnen wäre. - Ein weiterer Nachteil des bekannten Futterautomaten ist darin zu sehen, daß sich eine wünschenswerte Anfeuchtung des Futters mit Wasser oder Molke erst recht verbietet.

Der Erfindung liegt daher die Aufgabe zugrunde, eine Tierfütterungseinrichtung zu schaffen, die das Futter stets bedarfsgerecht abgibt und eine gezielte Futterbefeuchtung ermöglicht.

Diese Aufgabe ist bei einer Tierfütterungseinrichtung der eingangs genannten Art erfindungsgemäß dadurch gelöst, daß die Futterabgabeöffnung mit einer Schließklappe versehen ist, die einen Arm eines zweiarmigen Hebels bildet, dessen anderer Arm als Betätigungselement zum Öffnen der Futterabgabeöffnung vorgesehen ist.

Dadurch wird vorteilhafterweise erreicht, daß der Futtervorrat bei normalerweise geschlossener Futterabgabeöffnung vom feuchten oder gar nassen Futtertrog völlig getrennt ist, sodaß nach dem Aufschwenken der Schließklappe vollkommen trockenes Futter durch die Abgabeöffnung des Vorratsbehälters in den Trog fließt, wo es ohne Schaden für die Fließfähigkeit des bevorrateten Futters mit Wasser oder Molke nicht nur angefeuchtet, sondern sogar getränkt werden kann.

Zweckmäßig ist eine Anordnung der die Futterabgabeöffnung schließenden Klappe und ihres Betätigungselementes in solcher Höhe, daß das sich selbst fütternde Tier das Fressen des Futters einstellen und den Kopf so weit heben muß, daß das Betätigungselement erreicht wird. Dadurch wird eine dauernde Offenstellung der Schließklappe an der Futterabgabeöffnung während des Fressens verhindert. - Bei bevorzugten Ausführungsformen der erfindungsgemäßen Tierfütterungseinrichtung ist allerdings vorgesehen, daß das Betätigungselement mittels eines an einem am oberen Ende des Futtervorratsbehälters ortsfest angebrachten Widerlager aufgehängten biegsamen Stranges in der Weise sperrbar ist, daß die Schließklappe die Futterabgabeöffnung unvollständig schließt, damit ständig Futter aus dem Vorratsbehälter in den Trog nachfließen kann, zu dem Zweck, noch nicht mit der Selbstfütterung vertraute Jungtiere dazu anzuleiten.

Bei den bevorzugten Ausführungsformen der erfindungsgemäßen Tierfütterungseinrichtung sind die Futterabgabeöffnung und die diese normalerweise schließende Schließklappe im wesentlichen eben und waagrecht angeordnet, wobei die Klappe um eine waagrechte Schwenkachse schwenkbar ist. Bei dieser Anordnung muß das Futter im Vorrat nach einer kurzen Öffnungsbewegung der Schließklappe über diese nahezu im rechten Winkel aus dem Vorratsbehälter herausfließen, sodaß der Futtervorrat im Behälter auch während dessen Öffnung ausreichend gegen Befeuchtung von unten her geschützt ist und außerdem eine feine Dosierung des Futteraustrittes aus dem Behälter in den Trog möglich ist.

Bei den bevorzugten Ausführungsformen sind die Schließklappe und ihr Betätigungselement bezüglich des Futtertroges exzentrisch und bezüglich der Schwenkachse einander senkrecht gegenüberliegend angeordnet und liegt die Futterabgabeöffnung über einer schrägen Seitenwand des Futtertroges. Dadurch kann das Futter aus dem Vorrat nach Freigabe der Futterabgabeöffnung mittels der Schließklappe von dieser auf die schräge Trogwand über diese ins Trogzentrum fließen, ohne daß sein Zustrom durch den Kopf des sich fütternden Tieres gestört wird, welcher an der der schrägen Seitenwand des Futtertroges gegenüberliegenden Trogwand das Betätigungselement an der Schließklappe nach oben verlagern muß, um die Futterabgabeöffnung freizugeben.

Die bevorzugten Ausführungsformen, deren Futtervorratsbehälter ein Gehäuse und mindestens eine schräge Wand aufweist, wie das bei dem bekannten Futterautomaten der Fall ist, zeichnen sich dadurch aus, daß das Gehäuse zum Aufstellen geradzylindrisch ist und einen Trichter mit mindestens drei, vorzugsweise vier, schrägen Wänden und der Futterabgabeöffnung sowie den Futtertrog aufnimmt, wobei Trichter und/oder Futtertrog, gegebenenfalls höhenverstellbar, am Gehäuse befestigt sind. Insoweit ist die erfindungsgemäße Einrichtung zweckmäßig und gegebenenfalls anpaßbar ausgestaltet, wie sich gleich zeigen wird.

Bei einer der bevorzugten Ausführungsformen sind nämlich mindestens je zwei Trichter und Futtertröge in einem einzigen Gehäuse angeordnet, das zwischen jedem benachbarten Paar, bestehend aus Trichter und Futtertrog, eine vertikale Trennwand enthält, die sich bis zum oberen Trichterrand erstreckt. Bei dieser vervielfachten erfindungsgemäßen Einrichtung benötigt also nicht jede Abteilung ein eigenes Gehäuse, sondern lediglich eine Trennwand, die sie mit der benachbarten Abteilung gemeinsam hat. Infolgedessen besteht ein zusammenhängender Futtervorratsbehälter, bei dessen Befüllung die Trichter aller Abteilungen der Einrichtung im wesentlichen gleichzeitig beschickt werden.

Bei den bevorzugten Ausführungsformen ist auf der Oberseite der Schließklappe, oder ihres Betätigungselementes, an dieser ein Stab drehangelenkt, der von einem am oberen Ende des Futtervorratsbehälters ortsfest angebrachten Widerlager ungefähr vertikal im Behälter gehalten sowie an seinem oberen Ende mit einer Schraubenfeder versehen ist, die eine Schließkraft auf die Schließklappe erzeugt. Stab und Feder sorgen für eine Begrenzung der Öffnungsbewegung der Schließklappe und gegebenenfalls auch für eine Vorbelastung der Schließklappe in Schließrichtung entgegen dem Gewicht des Futtervorrats, um eine labile Schließung der Futterabgabeöffnung zu vermeiden, bei welcher schon eine sehr kleine Kraft auf das Betätigungselement zum Aufschwenken der Schließklappe führen würde.

Bei den bevorzugten Ausführungsformen ist als Widerlager eine den Stab aufnehmende Bohrung eines Bleches vorgesehen, deren Berandung eine Anschlaghülse als Federgehäuse trägt; und weist das obere Ende des an der Schließklappe angelenkten Stabes ein Außengewinde auf, auf das eine, gegebenenfalls mit einem Dreharm versehene, Anschlagmutter geschraubt ist, sowie zwischen Anschlaghülse und -mutter die auf Druck beanspruchbare Schraubenfeder trägt. Bei dieser Ausgestaltung ergibt sich eine einfache Einstellung des Federweges, der den Öffnungswinkel der Schließklappe bestimmt, und der Vorspannung der Feder, gegebenenfalls mittels des Dreharmes.

Bei den bevorzugten Ausführungsformen ist der Stab zum Rütteln des bevorrateten Futters mit starr, gegebenenfalls vorübergehend verschwenkbar, befestigten Querstäben versehen, die bei einer Längsbewegung des Stabes während des Auf- und Zuschwenkens der Schließklappe den Futtervorrat in innere Bewegung bringen, ohne bei der Entleerung des Futtervorratsbehälters zu stören. Die Fließfähigkeit des bevorrateten Futters ist deshalb jederzeit gewährleistet.

Bei den bevorzugten Ausführungsformen ist das Betätigungselement an der Schließklappe wie gesagt mittels eines an einem am oberen Ende des Futtervorratsbehälters ortsfest angebrachten Widerlager aufgehängten biegsamen Stranges in der Weise sperrbar, daß die Schließklappe die Futterabgabeöffnung unvollständig schließt.

Bei den bevorzugten Ausführungsformen weist das Widerlager des Stranges eine Schraube in einer Bohrung eines Bleches auf und greift auf der Oberseite des Bleches an diesem eine mit der Schraube zusammenwirkende Rändelmutter an, deren einstellbare Drehlage einen Mindestöffnungswinkel der Schließklappe für den Fall bestimmt, daß der Strang gestrafft ist, und zwar unabhängig von der eingestellten Vorspannung der Schraubenfeder.

Bei den bevorzugten Ausführungsformen ist der Strang durch einen abgedichteten Durchbruch im Trichter geführt, damit Strangumlenkungen und auf die Außenseite des Futtervorratsbehälters geführte Strangabschnitte vermieden werden.

Bei einer der bevorzugten Ausführungsformen, in der die erfindungsgemäße Einrichtung in Einzahl vorliegt, bilden die den Stab bzw. den Strang widerlagernden Bleche zwei T-förmig angeordnete, miteinander verbundene Streifen, deren drei nach unten abgewinkelte freie Enden am offenen oberen Ende des Futtervorratsbehälters gelagert sind. Damit ist die Zugänglichkeit des im übrigen offenen oberen Endes des Futtervorratsbehälters bewahrt. Bei einer Vervielfachung der erfindungsgemäßen Einrichtung bilden die Blechstreifen ein ebenfalls nicht wesentlich störendes Gitter, das beseitigt werden kann, nachdem der Stab an der Schließklappe ausgehängt wurde und wenn der Strang entweder fehlt oder an/mit seinem Widerlager vom Blechstreifen getrennt ist.

Bei den bevorzugten Ausführungsformen ist in, oder über, der unterhalb des Betätigungselementes gelegenen Hälfte des Futtertroges ein Wasserauslaßventil, gegebenenfalls höhenverstellbar, angeordnet, da im Bereich dieser Troghälfte auch die Schließklappe betätigt werden muß. Daher hat das sich selbst fütternde Tier auch die Möglichkeit, sich selbst zu tränken, ohne seinen Standplatz am Futtertrog zu wechseln, da es mit seinem Kopf sowohl das Betätigungselement an der Schließklappe der Futterabgabeöffnung als auch das Wasserauslaßventil erreicht.

Bei Varianten der bevorzugten Ausführungsformen ist das Wasserauslaßventil mit einem vom Betätigungselement an der Schließklappe betätigbaren Ventilöffnungshebel versehen, der ein federbelasteter zweiarmiger oder gewichtsbelasteter einarmiger Hebel sein kann, dessen gefederter Arm eine eine Düsenöffnung schließende Dichtungsscheibe trägt bzw. dessen Einarm einen Ventilstößel beaufschlagt.

Schließlich ist bei den bevorzugten Ausführungsformen an dem Futtervorratsbehälter ein vertikales Wasserzuleitungsrohr befestigt, das im Behälter das Wasserauslaßventil mit einem außerhalb des Behälters angeordneten verstellbaren Drosselventil verbindet, das frei zugänglich ist, und zwar am besten auf derjenigen Seite der Einrichtung, auf welcher das Tier steht. Dabei ist daran gedacht, daß das obere Ende des Wasserzuleitungsrohres, beispielsweise mittels eines Schlauches, an einen Wasserhahn eines Wasserleitungsnetzes anschließbar ist. Das Drosselventil mit seiner von vorn zugänglichen Stellschraube ermöglicht eine Dosierung des Wasserauslasses, die der Futterdosierung angemessen werden kann.

Statt der eine Schließkraft auf die Schließklappe erzeugenden Schraubenfeder oder zu deren Unterstützung könnte das Betätigungselement an der Schließklappe mit einem Gegengewicht belastet sein, welches seinerseits die Schließklappe in deren Schließlage zu schwenken sucht.

Im folgenden ist die Erfindung anhand zweier durch die Zeichnung beispielhaft dargestellter bevorzugter Ausführungsformen der erfindungsgemäßen Tierfütterungseinrichtung und zweier Varianten davon im einzelnen erläutert. Es zeigt in schematischer Darstellung

Fig 1 eine Seitenansicht einer ersten Ausführungsform bei Fehlen einer Seitenwand

Fig. 2 eine Draufsicht auf die erste Ausführungsform

Fig. 3 eine vergrößerte Einzelheit der ersten Ausführungsform

Fig. 4 entsprechend Fig. 1 eine Seitenansicht einer zweiten Ausführungsform bei Fehlen einer Seitenwand sowie

Fig. 5 und 6 gleiche Einzelheiten zweier Varianten der beiden Ausführungsformen

Die erfindungsgemäße Tierfütterungseinrichtung weist im ersten Ausführungsbeispiel gemäß Fig. 1 bis 3 ein Gehäuse (10) auf, das aus einem rechteckig-zylindrischen Mantel besteht, in dessen auf einen Stallboden gestelltes unteres Ende (10.1) ein Futtertrog (12) auf drei Seiten passend eingesetzt ist, und in dessen zweitem Viertel von unten ein im wesentlichen pyramidenstumpfförmiger Trichter (14) eingesetzt ist, dessen rechteckigzylindrischer oberer Rand (14.1) ebenso wie der rechteckig-zylindrische obere Rand (12.1) des Troges mit dem Gehäuse (10) vernietet oder verschraubt ist. Der Trichter (14) und die obere Hälfte (10.2) des Gehäuses bilden einen Futtervorratsbehälter (16), in den durch das offene obere Ende (10.3) des Gehäuses Futter in Form von Mehl oder Pellets eingefüllt werden kann.

Der Trichter (14) ist asymmetrisch gestaltet und an seinem unteren Ende mit einem waagrecht angeordneten, ebenen Ring (14.2) versehen, der eine Futterabgabeöffnung (14.3) des Trichters säumt, welche sich bezüglich der zentralen Längsachse des Gehäuses (10) in exzentrischer Lage über einer 45° schrägen Seitenwand (12.2) des Futtertroges befindet. Diese Futterabgabeöffnung (14.3) wird normalerweise durch eine dann waagrecht angeordnete, ebene Schließklappe (18) geschlossen, wenn diese an dem Trichterring (14.2) diesen abdichtend anliegt. Die Schließklappe (18) ist um eine am Trichter (14) waagrecht gelagerte Schwenkachse (20) nach unten aufschwenkbar und mit einem sich senkrecht zur Schwenkachse (20) erstreckenden Betätigungselement (22) versehen, das mit der Schließklappe einen zweiarmigen Hebel (24) bildet, der dem begrenzten Öffnen und Schließen der Futterabgabeöffnung (14.3) dient.

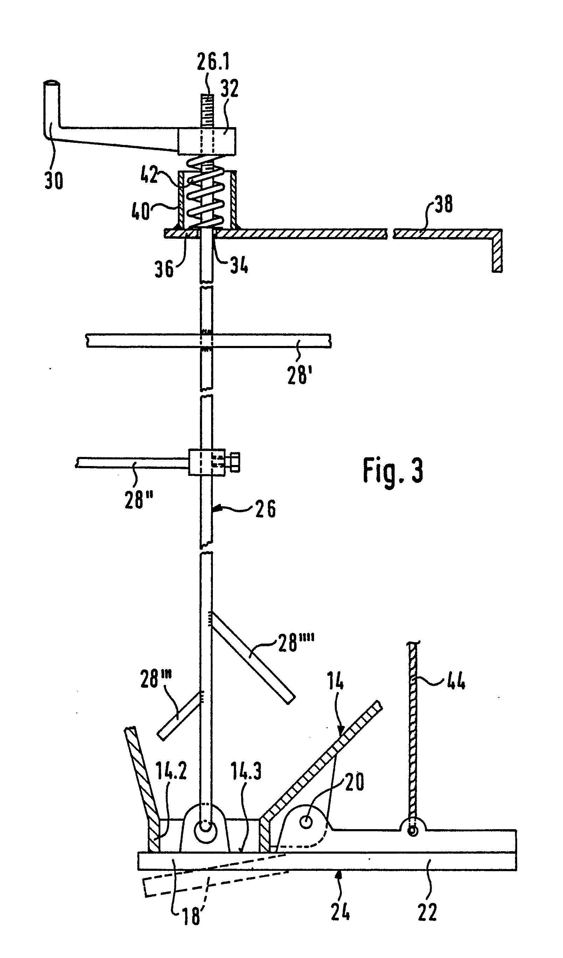

Auf der Oberseite der Schließklappe (18) ist innerhalb des Trichterringes (14.2) an der Schließklappe ein Stab (26) mittels Haken und Öse so angelenkt, daß dieser Stab relativ zur Schließklappe um eine zur Schwenkachse (20), welche die Längsachse des Gehäuses (10) ungefähr schneidet, parallele Achse ein wenig schwenkbar ist. Dieser unten an der Schließklappe (18) endende Stab (26), der mit schräg oder senkrecht angeordneten Querstäben (28) verschweißt oder aber verschraubt ist (siehe Fig. 3), weist an seinem aus dem Gehäuse (10) oben herausragenden oberen Ende ein Außengewinde (26.1) auf, auf das eine mit einem Drehharm (30) versehene Anschlagmutter (32) geschraubt ist, deren Funktion noch erläutert wird.

Das obere Ende des Stabes (26) ist mit ausreichendem Spiel in einer Bohrung (34) gehalten, die ungefähr auf der Längsachse des Gehäuses (10) liegt und einem waagrechten, streifenförmigen Blech (36) angehört, dessen nach unten abgewinkelte Enden am oberen Ende (10.3) des Gehäuses gelagert sind. Dieses Blech (36) ist mit einem senkrecht dazu angeordneten, ebenfalls waagrechten, streifenförmigen Blech (38) fest verbunden, dessen nach unten abgewinkeltes freies Ende gleichfalls am oberen Ende (10.3) des Gehäuses gelagert ist, sodaß beide Bleche eine T-Form bilden.

Die ein Widerlager des oberen Endes des Stabes (26) bildende Berandung der Bohrung (34) trägt eine kreiszylindrische Anschlaghülse (40), die mit der Anschlagmutter (32) zusammenwirkt und als Federgehäuse eine auf Druck beanspruchbare Schraubenfeder (42) aufnimmt, die zwischen der Berandung der Bohrung (34) und der Anschlagmutter auf dem oberen Ende des Stabes (26) sitzt, sodaß sie eine Schließkraft auf die Schließklappe (18) erzeugt, deren Höhe von der mittels des Dreharmes (30) einstellbaren Vorspannung der Feder (42) abhängt, die so gewählt wird, daß die Rückstellkraft der Feder etwas größer ist als das Gewicht des maximalen Futtervorrates im Behälter (16), und ermäßigt werden kann, wenn der Futtervorrat erheblich abgenommen hat. - Der Anschlag der Mutter (32) an der Hülse (40) beim Aufschwenken der Schließklappe (18) zum Öffnen des Trichters (14) begrenzt den Öffnungswinkel der Schließklappe.

Zur Begrenzung des Schließwinkels im Sinne einer geringfügigen Daueröffnung des Trichters (14) ist an dem Betätigungselement (22) ein biegsamer Strang (44), z.B. ein Seil, befestigt, welcher an einer Ösenschraube (46) aufgehängt ist, die von unten her durch eine den Schraubenschaft aufnehmende Bohrung des Bleches (38) gesteckt und mit einer Rändelmutter (48) versehen ist, die auf der Oberseite des Bleches (38) an der Berandung der Bohrung für die Schraube (46) angreift. Dabei bilden das Blech (38) mit der Berandung seiner Bohrung, die Ösenschraube (46) und die Rändelmutter (48) ein Widerlager des Stranges (44), der durch einen futterdichten Durchbruch (50) einer der vier schrägen Wände des Trichters (14) geführt ist. - Durch Einstellung der Rändelmutter (48) kann erreicht werden, daß die Schließklappe (18) bei gestrafftem Strang (44) die Futterabgabeöffnung (14.3) des Trichters unvollständig schließt, sodaß Lockfutter austreten kann.

An einer der schrägen Seitenwand (12.2) des Futtertroges gegenüberliegenden, vertikalen Seitenwand (12.3) desselben ist unterhalb des Betätigungselementes (22) im Futtertrog (12) ein Wasserauslaßventil (52) angeordnet, das am unteren Ende eines vertikalen Wasserzuleitungsrohres (54) befestigt ist, dessen aus dem Gehäuse (10) herausragendes oberes Ende mit einem verstellbaren Drosselventil (56) und einem Schlauchanschluß (58) versehen ist. Das Rohr (54) ist in seiner Längsrichtung in einem im Trichter (14) befestigten Block (60) geführt, der mit einer vom Trichterinneren aus zugänglichen Klemmschraube (62) versehen ist, die eine Höheneinstellung des Auslaßventiles (52) ermöglicht, das von dem sich selbst fütternden Tier mittels eines pendelnd aufgehängten Betätigungsrohres (52.1) zu öffnen ist, sodaß sich das Tier auch selbst tränken kann.

Die Selbstfütterung des Tieres geschieht durch Hochschwenken des Betätigungselementes (22) an der Schließklappe (18) in Richtung des in Fig. 1 eingezeichneten vertikalen Pfeiles, der nach oben zeigt. Dazu benutzt das Tier seine Schnauze oder den Kopfscheitel.

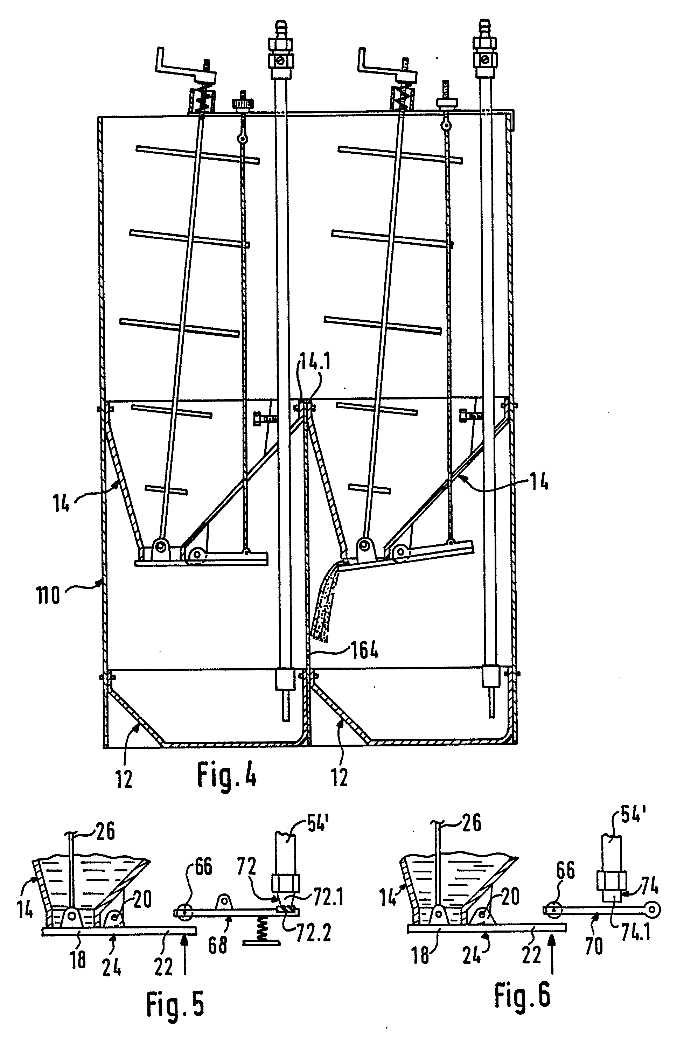

Fig. 4 veranschaulicht eine Verdoppelung der erfindungsgemäßen Tierfütterungseinrichtung in deren erster Ausführungsform als zweite Ausführungsform, deren Besonderheit hauptsächlich darin besteht, daß zwei Trichter (14) und zwei Futtertröge (12) in einem einzigen Gehäuse (110) angeordnet sind, das dem Gehäuse (10) der ersten Ausführungsform im wesentlichen entspricht, aber eine halbhohe, vertikale Trennwand (164) zwischen den beiden Trichtern und zwischen den beiden Trögen aufweist. Am oberen Rand dieser Trennwand (164), auf der die Verlängerungsrichtung des Gehäuses senkrecht steht, sind die einander benachbarten Abschnitte der oberen Ränder (14.1) der Trichter befestigt.

Offensichtlich kann die erfindungsgemäße Tierfütterungseinrichtung auf die dargestellte Weise vervielfacht werden.

Bei zwei Varianten der ersten Ausführungsform betätigt das Element (22) nicht nur die Schließklappe (18), sondern gemäß Fig. 5 und 6 über eine Rolle (66) auch einen federbelasteten zweiarmigen Hebel (68) bzw. einen einarmigen gewichtsbelasteten Hebel (70) zur Öffnung eines Wasserauslaßventiles (72 bzw. 74) am unteren Ende des auf die Höhe des Betätigungselementes (22) gekürzten Wasserzuleitungsrohres (54).

Das Auslaßventil (72) besteht aus einer Düse (72.1) und einer bei geschlossenem Ventil anliegenden Dichtungsscheibe (72.2), die an dem gefederten Arm des Ventilöffnungshebels (68) befestigt ist, dessen anderer Arm die Rolle (66) trägt.

Das Auslaßventil (74) weist einen durch den Ventilbetätigungshebel (70) eindrückbaren Ventilstößel (74.1) auf, der einen Ventilkörper von einem Ventilsitz abhebt.

## Ansprüche

1.) Tierfütterungseinrichtung mit einem Futtervorratsbehälter (16) mit einer mehr oder weniger zu öffnenden Futterabgabeöffnung (14.3) über einem Futtertrog (12), dadurch **gekennzeichnet,** daß die Futterabgabeöffnung (14.3) mit einer Schließklappe (18) versehen ist, die einen Arm eines zweiarmigen Hebels (24) bildet, dessen anderer Arm als Betätigungselement (22) zum Öffnen der Futterabgabeöffnung (14.3) vorgesehen ist.

2.) Einrichtung nach Anspruch 1, dadurch gekennzeichnet, daß die Futterabgabeöffnung (14.3) und die diese normalerweise schließende Schließklappe (18) im wesentlichen eben und waagrecht angeordnet sind, wobei die Klappe um eine waagrechte Schwenkachse (20) schwenkbar ist.

3.) Einrichtung nach Anspruch 1 oder 2, dadurch gekennzeichnet, daß die Schließklappe (18) und ihr Betätigungselement (22) bezüglich des Futtertroges (12) exzentrisch und bezüglich der Schwenkachse (20) einander senkrecht gegenüberliegend angeordnet sind und daß die Futterabgabeöffnung (14.3) über einer schrägen Seitenwand (12.2) des Futtertroges (12) liegt.

4.) Einrichtung nach einem der Ansprüche 1 bis 3, deren Futtervorratsbehälter (16) ein Gehäuse (10) und mindestens eine schräge Wand aufweist, dadurch **gekennzeichnet,** daß das Gehäuse (10) zum Aufstellen geradzylindrisch ist und einen Trichter (14) mit mindestens drei schrägen Wänden und der Futterabgabeöffnung (14.3) sowie den Futtertrog (12) aufnimmt, wobei Trichter und/oder Futtertrog, gegebenenfalls höhenverstellbar, am Gehäuse befestigt sind.

5.) Einrichtung nach Anspruch 4, dadurch gekennzeichnet, daß mindestens je zwei Trichter (14) und Futtertröge (12) in einem einzigen Gehäuse (110) angeordnet sind, das zwischen jedem benachbarten Paar, bestehend aus Trichter und Futtertrog, eine vertikale Trennwand (164) enthält, die sich bis zum oberen Trichterrand (14.1) erstreckt.

6.) Einrichtung nach einem der Ansprüche 1 bis 5, dadurch gekennzeichnet, daß auf der Oberseite der Schließklappe (18), oder ihres Betätigungselementes (22), an dieser ein Stab (26) drehangelenkt ist, der von einem am oberen Ende (10.3) des Futtervorratsbehälters (16) ortsfest angebrachten Widerlager (34) ungefähr vertikal im Behälter gehalten sowie an seinem oberen Ende mit einer Schraubenfeder (42) versehen ist, die eine Schließkraft auf die Schließklappe (18) erzeugt.

7.) Einrichtung nach Anspruch 6, dadurch gekennzeichnet, daß als Widerlager eine den Stab (26) aufnehmende Bohrung (34) eines Bleches (36) vorgesehen ist, deren Berandung eine Anschlaghülse (40) als Federgehäuse trägt; und daß das obere Ende des an der Schließklappe (18) angelenkten Stabes (26) ein Außengewinde (26.1) aufweist, auf das eine, gegebenenfalls mit einem Dreharm (30) versehene, Anschlagmutter (32) geschraubt ist, sowie zwischen Anschlaghülse und -mutter die auf Druck beanspruchbare Schraubenfeder (42) trägt.

8.) Einrichtung nach Anspruch 6 oder 7, dadurch gekennzeichnet, daß der Stab (26) zum Rütteln des bevorrateten Futters mit starr, gegebenenfalls vorübergehend verschwenkbar, befestigten Querstäben (28) versehen ist.

9.) Einrichtung nach einem der Ansprüche 1 bis 8, dadurch gekennzeichnet, daß das Betätigungselement (22) mittels eines an einem am oberen Ende (10.3) des Futtervorratsbehälters (16) ortsfest angebrachten Widerlager (38, 46, 48) aufgehängten biegsamen Stranges (44) in der Weise sperrbar ist, daß die Schließklappe (18) die Futterabgabeöffnung (14.3) unvollständig schließt.

10.) Einrichtung nach Anspruch 9, dadurch gekennzeichnet, daß das Widerlager (38, 46, 48) des Stranges (44) eine Schraube (46) in einer Bohrung eines Bleches (38) aufweist und daß auf der Oberseite des Bleches (38) an diesem eine mit der Schraube (46) zusammenwirkende Rändelmutter (48) angreift.

11.) Einrichtung nach den Ansprüchen 4 und 9, dadurch gekennzeichnet, daß der Strang (44) durch einen abgedichteten Durchbruch (50) im Trichter (14) geführt ist.

12.) Einrichtung nach den Ansprüchen 6 und 9, dadurch gekennzeichnet, daß die den Stab (26) bzw. den Strang (44) widerlagernden Bleche (36 und 38) zwei T-förmig angeordnete, miteinander verbundene Streifen bilden, deren drei nach unten abgewinkelte freie Enden am offenen oberen Ende (10.3) des Futtervorratsbehälters (16) gelagert sind.

13.) Einrichtung nach einem der Ansprüche 1 bis 12, dadurch gekennzeichnet, daß in, oder über, der unterhalb des Betätigungselementes (22) gelegenen Hälfte des Futtertroges (12) ein Wasserauslaßventil (52), gegebenenfalls höhenverstellbar, angeordnet ist.

14.) Einrichtung nach Anspruch 13, dadurch gekennzeichnet, daß das Wasserauslaßventil (72; 74) mit einem vom Betätigungselement (22) an der Schließklappe (18) betätigbaren Ventilöffnungshebel (68; 70) versehen ist.

15.) Einrichtung nach Anspruch 13 oder 14, dadurch gekennzeichnet, daß an dem Futtervorratsbehälter (16) ein vertikales Wasserzuleitungsrohr (54) befestigt ist, das im Behälter das Wasserauslaßventil (52) mit einem außerhalb des Behälters angeordneten verstellbaren Drosselventil (56) verbindet, das frei zugänglich ist.

16.) Einrichtung nach einem der Ansprüche 1 bis 15, dadurch gekennzeichnet, daß das Betätigungselement (22) an der Schließklappe (18) mit einem Gegengewicht belastet ist, welches die Schließklappe in ihre Schließlage drängt.

Fig.1

Fig.2

#200 358 HAIGES

Fig. 3

Fig. 4

Fig. 5

Fig. 6